# EUROPÄISCHE PATENTSCHRIFT

(11) **EP 0 602 678 B1**
(45) Veröffentlichungstag und Bekanntmachung des Hinweises auf die Patenterteilung: **25.06.1997**
(21) Anmeldenummer: 93120446.5
(22) Anmeldetag: 17.12.1993
(51) Int. Cl.: B23Q 1/00, B23Q 17/22

(54) **Verfahren und Vorrichtung zur Bearbeitung von aus Kunststoff- oder Metallprofilstücken zusammengeschweissten Rahmen**
Method and device for machining frames welded from plastic or metal profiles
Procédé et dispositif pour usiner des encadrements soudés ensemble de profilés faits en matière plastique ou en métal

(30) Priorität: 17.12.1992 DE 4242608
(43) Veröffentlichungstag der Anmeldung: 22.06.1994
(73) Patentinhaber: Eisenbach, Bernd, D-65611 Brechen (DE)
(72) Erfinder: Eisenbach, Bernd, D-65611 Brechen (DE)
(74) Vertreter: Müller, Eckhard, Dr.

(56) Entgegenhaltungen:
- EP-A- 0 321 669
- EP-A- 0 365 958
- EP-A- 0 388 263
- DD-A- 229 637
- DE-A- 3 408 348
- DE-A- 3 823 564
- US-A- 3 605 909

## Beschreibung

Die Erfindung bezieht sich auf ein Verfahren sowie eine Vorrichtung zum Bearbeiten der Eckverbindungen von aus Kunststoff- oder Metallprofilstücken zusammengeschweißten Rahmen, insbesondere Fenster- oder Türrahmen o. dgl. mit mindestens einem Bearbeitungswerkzeug, welches durch einen eine Tasteinrichtung aufweisenden Werkzeugträger in seine Bearbeitungsstellung an den in einer Aufspanneinrichtung aufgenommenen Rahmen verfahrbar ist.

Bei der Bearbeitung von Fenster- oder Türrahmen, welche aus Kunststoff- oder Metallprofilstücken zusammengeschweißt sind, wirken sich die Toleranzen, die sich einmal durch die Profile selbst und zum anderen durch das Zusammenschweißen der Profile zu dem jeweiligen Rahmeneck ergeben, ungünstig auf die Bearbeitung des Rahmenecks, insbesondere das Entgraten der Schweißnaht aus. Bedingt durch diese Toleranzen sind die Bearbeitungswerkzeuge nicht den tatsächlichen Rahmeneckenkanten entsprechend ausgerichtet. Insbesondere bei in Bearbeitungsstellung horizontal verlaufenden Bearbeitungsflächen, welche zudem beim späteren Einbau des Rahmens oder Flügels sichtbar sind, können Grate oder Verkratzungen an den Bearbeitungsflächen entstehen. Wünschenswert wäre, daß insbesondere die horizontal verlaufenden Bearbeitungsflächen nach ihrer Bearbeitung an die Oberfläche der Profilkanten der Schenkel anschließen.

Die Toleranzen der Profilstäbe selbst resultieren aus den einzelnen Verfahrensschritten bei der Extrusion des Kunststoffes und auch aus der Kunststoff-Zusammensetzung. Diese Profiltoleranzen werden häufig mit ± 0,3 mm für die sich über die gesamte Kontur des Profiles erstreckenden Abmessungen angegeben. Es hat sich aber gezeigt, daß beim Schweißen der Kunststoffprofile mit ± 0,2 mm vergleichbare Toleranzen zusätzlich auftreten. Diese können daraus resultieren, daß es in den Aufnahmen der Schweißvorrichtung zu einem Verspannen, Verdrillen und/oder zu einem Versatz der Schenkel zueinander kommt. Ein Problem beim Einspannen der Schenkel in der Schweißvorrichtung besteht auch darin, daß die Profilstäbe infolge der Extrusion keine parallelen, sondern extrem bauchige Sichtflächen und Spannkanten aufweisen können. Durch die Spannteller der Einspanneinrichtung an den Schweißvorrichtungen kann es dann zu Verformungen und entsprechenden Maßtoleranzen des späteren Rahmens kommen. Weitere Toleranzursachen sind unsaubere Auflagen in der Schweißmaschine. Ferner ist zu berücksichtigen, daß aufgrund der unterschiedlichen Spannposition des Rahmens in der Schweißmaschine und der Eckenbearbeitungseinrichtung zusätzliche Toleranzen auftreten können. Die Profiltoleranzen und die Schweißtoleranzen können sich im Extremfall addieren.

Den Profiltoleranzen versuchte man bislang dadurch beizukommen, daß man nach Feststellung von fehlerhafter Bearbeitung oder sogar von Ausschuß die Bearbeitungsmaschine an die entsprechende Charge von Profilstäben angepaßt bzw. korrigiert hat. Bis auf einen Versatz an den Sichtflächen des Rahmens infolge des Verschweißens der Profilstäbe mußte man die durch das Schweißen entstehenden Schweißtoleranzen bzw. Rahmentoleranzen als gegeben hinnehmen. Diese Schweiß- und Rahmentoleranzen können jedoch in vergleichbarer Größenordnung wie die Profiltoleranzen sein.

Den sich beim Schweißen ergebenden Versatz an den Sichtflächen des Rahmenecks versucht man gemäß der DE 23 17 554 C3 dadurch auszugleichen, daß zwei im Abstand voneinander angeordnete Taster die Sichtflächen der beiden Rahmenschenkel antasten, um mittels eines bzgl. der Aufnahmeebene des Rahmens schräggestellten Scheibenfräsers diesen Versatz an den Sichtflächen optisch zu nivellieren. Schließlich ist auch aus DE 38 23 564 A1 eine Außeneckverputzvorrichtung für Fensterrahmen bekannt mit einem als Bearbeitungswerkzeug angetriebenen Kreissägeblatt, welches in der Rahmenebene sowie senkrecht hierzu verschiebbar ist. Hierbei ist ein Taster vorgesehen, welcher den zu bearbeitenden Fensterrahmen an einer gegenüber der Bearbeitungsstelle versetzten Stelle in waagrechter und senkrechter Richtung abtastet und die Bewegung des Kreissägeblattes nach der Ist-Kontur des Fensterrahmens steuert, um unterschiedliche Profile und Profilabweichungen infolge von Profiltoleranzen und Schweißtoleranzen auszugleichen. Bei numerisch gesteuerten Bearbeitungsanlagen ist diese Vorgehensweise jedoch nicht möglich, da die Bearbeitungswerkzeuge fest an dem Werkzeugträger angeordnet sind.

Davon ausgehend liegt der Erfindung die Aufgabe zugrunde, ein Verfahren sowie eine Vorrichtung der eingangs genannten Art dahingehend weiterzuentwickeln, daß Profil-, Schweiß- und Rahmentoleranzen, insbesondere an den parallel zur Aufspannebene des Rahmens verlaufenden Bearbeitungsflächen und vorallem im Außeneckbereich ausgeglichen werden.

Zur Lösung der Aufgabe ist es nach der Erfindung i. w. vorgesehen, daß wenigstens eine parallel zur Aufspannebene des Rahmens verlaufende Bearbeitungsfläche abgetastet wird und der oder die dabei gewonnenen Meßwerte als Stellgröße bzw. -größen für die Ausrichtung des wenigstens einen Bearbeitungswerkzeuges in eine Grundstellung an dem Werkstück über eine Steuereinrichtung umgewandelt wird bzw. werden. Die Steuereinrichtung wandelt die Meßwerte um und liefert die Stellimpulse für die Nullpunktkorrektur des Werkzeugträgers bzw. für das mindestens eine Bearbeitungswerkzeug. Die Steuereinrichtung kann bspw. pneumatisch, hydraulisch, elektrisch oder auch elektronisch ausgeführt sein. Hierbei können insbesondere der Profilfräser für die Außeneckbearbeitung, aber auch die Sichtflächenmesser, die Inneneck- und Dichtungsnut-Fräser sowie u. a. auch Inneneckabstechmesser in eine die Toleranzen i. w. ausgleichende Grundstellung für jede Rahmeneckenlage gebracht werden. Durch die Erfindung ist erreicht, daß nicht nur die Sichtflächen des Rahmenecks, sondern auch die parallel zur Aufspannebene des Rahmens verlaufenden Flächen, insbesondere diejenigen des Rahmenaußenecks sowie die äußeren Kanten des Rahmenaußenecks, welche zum Teil auch in eingebauter Stellung des Rahmens oder Flügels sichtbar sind, optimale bearbeitet werden können, ohne daß Grate oder Verkratzungen an diesen Bearbeitungsflächen auftreten. In dieser Art läßt sich verfahren, bis alle Ecken des Rahmens abgearbeitet sind.

Nach einer ersten besonderen Ausführungsform der Erfindung ist es vorgesehen, daß die Abtastung im Bereich der äußeren Kanten des Rahmens erfolgt. Es hat sich nämlich bei Untersuchungen gezeigt, daß die parallel zur Aufspannebene des Rahmens verlaufenden Kantenbereiche an der Rahmenaußenkontur die maßgeblichen Meßpunkte darstellen, um Profil-, Schweiß- und Rahmentoleranzen, insbesondere am Rahmenaußeneck auszugleichen. Von besonderem Vorteil dabei ist es, wenn die Abtastung im äußersten Kantenbereich des Profils erfolgt.

Besonders vorteilhaft ist es auch, wenn die Abtastung im Bereich der Gehrung der zusammengeschweißten Profilstücke erfolgt, so daß die Meßpunkte möglichst nahe oder in den Bearbeitungsbereichen liegen.

Nach einer weiteren Ausführungsform der Erfindung werden an der wenigstens einen Bearbeitungsfläche der Außenkontur des Rahmens an mehreren unterschiedlichen Stellen Meßwerte aufgenommen, um hieraus im Verhältnis zu einem theoretischen Nullwert die Stellgrößen für die Einstellung der Bearbeitungswerkzeuge zu bilden.

Selbstverständlich ist es mit der Erfindung auch möglich, daß die Abtastung sowohl an der Ober- als auch an seiner Unterseite bzw. bei einer vertikalen Bearbeitung des Rahmens an der Vorder- und/oder Rückseite erfolgt, um auch insoweit die Stellgrößen für das mindestens eine Bearbeitungswerkzeug zu bilden.

Vorrichtungsmäßig wird die Aufgabe dadurch gelöst, daß die Abtasteinrichtung wenigstens einen Sensor zur Abtastung wenigstens einer parallel zur Aufspannebene verlaufende Bearbeitungsfläche des Rahmens aufweist sowie eine Steuereinrichtung zur Auswertung des oder der dabei gewonnenen Meßwerte und nachfolgenden Ausrichtung des mindestens einen Bearbeitungswerkzeuges in eine Grundstellung bezüglich des Rahmens vorgesehen ist. Insbesondere die Bearbeitungsflächen des Rahmenaußenecks, wie bspw. die in Stufen verlaufenden Bearbeitungsflächen eines Flügelrahmens lassen sich hierdurch optimal bearbeiten. Es können aber auch all diejenigen Bearbeitungswerkzeuge, welche für einen Toleranzausgleich entsprechend eingestellt werden sollen, an einem gemeinsamen, wenigstens in einer Ebene parallel zur Aufspannebene des Rahmens verfahrbaren Werkzeugträger angeordnet sein, welcher senkrecht zur Meßfläche zusätzlich verstellbar ist. Eine derartige Ausgestaltung empfiehlt sich insbesondere bei konventionell gesteuerten Bearbeitungsanlagen.

In einer bevorzugten Ausführungsform der Erfindung ist es vorgesehen, daß der Sensor zum Abtasten der äußeren Endbereiche der Rahmeneckverbindung ausgebildet ist, vorzugsweise an den äußersten Spitzen der jeweiligen Eckverbindung.

Besonders günstig ist es auch, wenn der Sensor zur Abtastung im Gehrungsbereich der zusammengeschweißten Profilstücke des Rahmens ausgebildet ist.

Der Sensor kann bspw. an der Profilspanneinheit, welche zum Einspannen der Rahmenschenkel innerhalb der Bearbeitungsanlage vorgesehen ist, angeordnet sein.

Alternativ oder zusätzlich ist es aber auch möglich, daß der Sensor an dem Werkzeugträger für die Bearbeitungswerkzeuge angeordnet ist.

Im Rahmen der Erfindung liegt es auch, daß die Steuereinrichtung als NC-Steuerung und der Sensor als Schaltelement ausgebildet ist, welcher bzgl. einer Achse der NC-Steuerung, vorzugsweise der senkrecht auf der Aufspannebene des Rahmens stehenden Achse, aktivierbar ist. Hierdurch läßt sich eine Ausrichtung der Bearbeitungswerkzeuge in einfacher Weise durch Nullpunkt-Verschiebung entsprechend der gewonnenen Meßdaten realisieren. Dabei werden die Meßdaten in der Elektronik verarbeitet und für eine Nullpunkt-Verschiebung der NC-Programme verwendet. Beim Bearbeiten der Schweißraupen mittels einer NC-gesteuerten Bearbeitungsanlage werden durch das Schaltelement vor dem Bearbeiten zunächst die Bearbeitungsflächen im Kantenbereich der Außenkontur des Rahmens mit dem vorhandenen NC-Antrieb vermessen und die erhaltenen Schaltimpulse an einen, vorzugsweise schaltzeitfreien Eingang der Elektronik weiterleitet. Die an einem solchen Eingang abgegriffenen Schaltimpulse bzw. Signale werden unabhängig von der Zykluszeit und der Meßgeschwindigkeit der elektronischen Steuerung verarbeitet, so daß eine schnelle und exakte Einstellung der Bearbeitungswerkzeuge erreicht ist. Hierdurch erfolgt die Aktivierung der Nullpunkt-Verschiebung entsprechend den ermittelten Meßwerten.

Selbstverständlich ist es nach der Erfindung auch möglich, daß zumindest ein Sensor zur Abtastung wenigstens einer bzgl. der Aufspannebene des Rahmens senkrecht verlaufenden Bearbeitungsfläche vorgesehen ist, um hierdurch eine Nullpunkt-Einstellung der Bearbeitungswerkzeuge bzgl. der Breite des jeweiligen Profils zu erreichen. Auch können zwei Sensoren eingesetzt werden, um die Breite auf gegenüberliegenden Bearbeitungsflächen abzufragen und entsprechende Bearbeitungswerkzeuge in Stellung zu bringen.

Der mindestens eine Sensor bzw. das mindestens eine Schaltelement sollte im 1/100-Millimeterbereich die Höhendifferenzen bzw. Toleranzen abtasten können.

Ein derartiges Verfahren und eine entsprechende Vorrichtung lassen sich mit Vorteil überall dort einsetzen, wo Werkstücktoleranzen bei Dreh-, Fräß-, Bohr-, Schweißvorgängen u. dgl. ausgeglichen werden müssen, wie bspw. bei Werkzeugmaschinen zum Bearbeiten von Gußformteilen oder bspw. von blankgezogenen U-Stahlprofilen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: einen Längsschnitt durch einen Werkzeugträger einer Vorrichtung zur Bearbeitung eines Fenster- oder Türrahmens und
- Figur 2: im Querschnitt das Rahmeneck eines Fensterrahmens mit erfindungsgemäßen Taster zur Ermittlung der Werkstücktoleranzen.

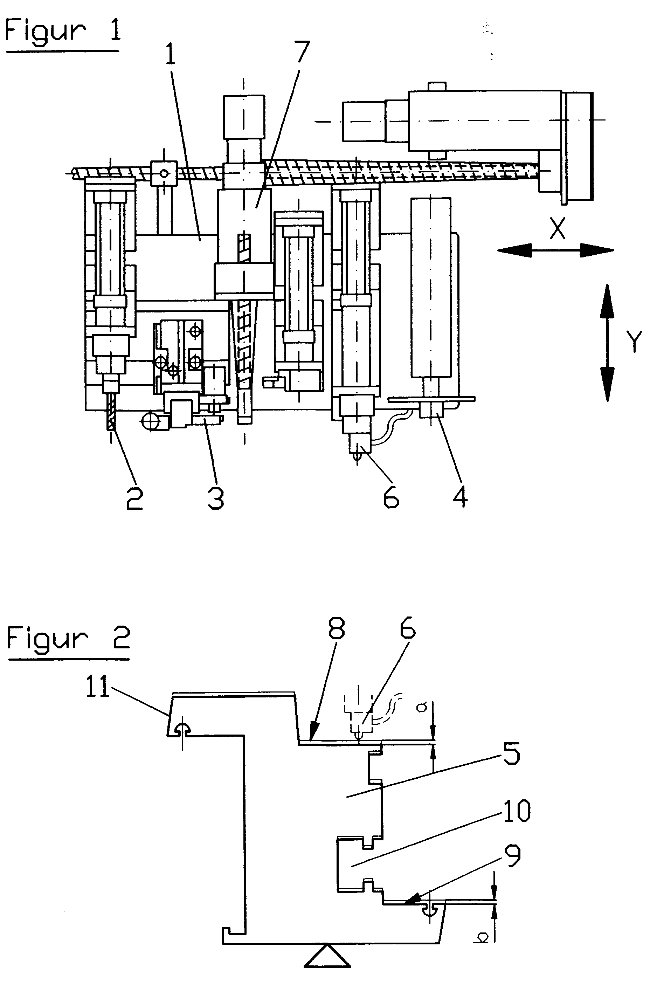

In Figur 1 ist ein Werkzeugträger 1 einer numerisch gesteuerten Vorrichtung zur Bearbeitung des Rahmenecks eines Fensterrahmens dargestellt. Der Werkzeugträger 1 weist bei dem hier gewählten Ausführungsbeispiel einen Bohrer 2, Sichtflächenmesser 3 und einen Außeneckprofilfräser 4 zur Bearbeitung des Außenecks der Rahmenverbindung auf. Selbstverständlich kann die Vorrichtung auch mit weiteren Werkzeugträgern mit Bearbeitungswerkzeugen versehen sein, wobei derartige Bearbeitungseinheiten auch auf der Unterseite des Rahmens 5 angeordnet sein können, um den Rahmen 5 auf seiner Unterseite zeitgleich oder zeitversetzt zu bearbeiten.

Wie in der Figur 2 angedeutet, treten bei der hier angenommenen horizontalen Bearbeitungslage des Rahmens 5 an seinen horizontalen Bearbeitungsflächen der Außenkontur des Rahmens 5, insbesondere im Bereich seiner nach außen vorstehenden Außeneckflächen, Werkstücktoleranzen a, b auf. Diese Werkstücktoleranzen a, b müssen bzgl. der Grundeinstellung der Bearbeitungswerkzeuge 2, 3, insbesondere des Profilfräsers 4 für das Außeneck ausgeglichen werden, um Grate oder Kratzer an den z. T. auch in eingebautem Zustand des Rahmens 5 sichtbaren Flächen, wie bspw. an den vorstehenden Flächen am Rahmenaußeneck und den Außenkanten bei einem Flügelrahmen, zu vermeiden. Um eine Einstellung der Bearbeitungswerkzeuge 2, 3, 4 bzgl. ihrer Grundstellung zu erreichen, weist bei dem hier gewählten Ausführungsbeispiel der Werkzeugträger 1 einen Sensor 6 auf, welcher gerade diese Bearbeitungsflächen der Außenkontur des Rahmens 5 abtastet. Dies erfolgt mittels der Antriebseinheit 7 des NC-gesteuerten Werkzeugträgers 1, und zwar bevor die Bearbeitungswerkzeuge 2, 3, 4 in Arbeitsstellung gebracht werden. Dabei kann bspw. sowohl die in Figur 2 obere horizontale Meßkante 8 und/oder auch die untere Meßkante 9, vorzugsweise im Gehrungsbereich der zusammengeschweißten Profilstücke des Rahmenecks abgetastet werden. Die dabei ermittelten Meßwerte werden einem sogenannten schnellen Eingang einer elektronischen Steuereinheit der NC-Steuerung zugeführt, welche die Y-Achsen-Koordinate des Werkzeugträgers 1 bzgl. die Nullpunkt-Verschiebung der Bearbeitungswerkzeuge 2, 3, 4 einstellt. Die an einem solchen Eingang abgegriffenen Schaltimpulse bzw. -signale werden unabhängig von der Zykluszeit und der Meßgeschwindigkeit der elektronischen Steuerung verarbeitet, so daß eine sichere und exakte Einstellung der Bearbeitungswerkzeuge 2, 3, 4 erreicht ist. Danach arbeiten die jeweiligen Bearbeitungswerkzeuge das Rahmeneck ab. Entsprechend wird bei den weiteren Rahmenecken verfahren.

Dagegen wurde bei der bislang eingesetzten Bearbeitung der Nullpunkt für die Bearbeitungswerkzeuge fest vorgegeben, indem unter Berücksichtigung der Toleranzen von etwa ± 0,2 bis ± 0,4 mm über dem theoretischen Nullpunkt ein Sicherheitsfaktor in Ansatz gebracht wurde. Wenn das eingelegte Profil mit der jeweiligen horizontalen Bearbeitungsfläche den angenommenen Nullpunkt überschritt, konnte es zu Kratzern an den Bearbeitungsflächen, insbesondere im Bereich des Rahmenaußenecks kommen, welche mit weiteren Arbeitsgängen mühsam beseitigt werden mußten. Im Falle, daß das eingelegte Profil unterhalb des angenommenen Nullpunktes zu liegen kam, blieb ein Teil der Schweißraupe stehen, so daß ein Grat entstand, welcher dann etwas leichter zu entfernen war. Bei der hier beschriebenen Vorgehensweise wird dagegen der Nullpunkt der Bearbeitungswerkzeuge an die tatsächliche Geometrie bzw. Lage des Profils innerhalb der Aufnahme angepaßt.

Selbstverständlich ist es auch möglich, daß zusätzlich an die Unterseite des Rahmens 5 ein Sensor an eine Bearbeitungsfläche herangefahren wird, so daß die fest eingegebene Profilkontur sozusagen geteilt wird, derart, daß ausgehend von dem oberen und dem unteren Nullpunkt jeweils zu einer Ebene gefahren wird, wo sich keine kritische Stellung bzgl. der Bearbeitung befindet, wie bspw. in der Nut 10 zur Aufnahme von Beschlägen, welche auch Euro-Nut bezeichnet wird.

Schließlich ist es auch möglich, daß ein Sensor an eine bezüglich der in Figur 2 gewählten Aufspannebene vertikale Bearbeitungsfläche, wie bspw. diejenige mit Bezugszeichen 11, abtastet, um hierdurch eine Nullpunkt-Einstellung der Bearbeitungswerkzeuge bzgl. der Breite des jeweiligen Profils 11 zu erreichen, wobei in der gleichen Vorgehensweise verfahren werden kann, wenn die Breite mittels zwei Sensoren auf gegenüberliegenden vertikalen Bearbeitungsflächen abgefragt wird, um entsprechende Bearbeitungswerkzeuge in Stellung zu bringen.

### Bezugszeichenliste

- 1: - Werkzeugträger
- 2: - Fräser/Bohrer
- 3: - Sichtflächenmesser
- 4: - Außeneck-Profilfräser
- 5: - Rahmen
- 6: - Sensor
- 7: - NC-Antrieb vertikal (Y-Achse)
- 8: - Meßkante
- 9: - Meßkante
- 10: - Nut
- 11: - Meßkante
- a: - Werkstücktoleranz
- b: - Werkstücktoleranz

## Patentansprüche

1. Verfahren zum Bearbeiten der Eckverbindungen von aus Kunststoff- oder Metallprofilstücken zusammengeschweißten Rahmen (5), insbesondere Fenster- oder Türrahmen mit mindestens einem Bearbeitungswerkzeug (2, 3, 4), welches durch einen eine Tasteinrichtung aufweisenden Werkzeugträger (1) in seine Bearbeitungsstellung an den in einer Aufspanneinrichtung aufgenommenen Rahmen (5) verfahrbar ist, dadurch gekennzeichnet, daß vor der Bearbeitung wenigstens eine parallel zur Aufspannebene des Rahmens (5) verlaufende Bearbeitungsfläche abgetastet wird und der oder die dabei gewonnenen Meßwerte als Stellgröße bzw. -größen für die Ausrichtung des mindestens Bearbeitungswerkzeuges (2, 3, 4) in eine Grundeinstellung an dem Werkstück über eine Steuereinrichtung umgewandelt wird bzw. werden.

2. Verfahren nach Anspruch 1, dadurch gekennzeichnet, daß die Abtastung im Bereich der äußeren Kanten des Rahmens (5) erfolgt.

3. Verfahren nach Anspruch 1 oder 2, dadurch gekennzeichnet, daß die Abtastung im Bereich der Gehrung der zusammengeschweißten Profilstücke des Rahmens (5) erfolgt.

4. Verfahren nach einem der Ansprüche 1 bis 3, dadurch gekennzeichnet, daß an der wenigstens einen parallel zur Aufspannebene des Rahmens verlaufenden Bearbeitungsfläche mehrere Meßwerte, vorzugsweise an verschiedene Meßstellen, aufgenommen werden und daraus im Verhältnis zu einem theoretischen Nullwert die Stellgrößen für die Einstellung des mindestens einen Bearbeitungswerkzeuges (2, 3, 4) gebildet wird.

5. Verfahren nach einem der Ansprüche 1 bis 4, dadurch gekennzeichnet, daß die Abtastung an der Ober- und/oder Unterseite bzw. Vorder- und/oder Rückseite des Rahmens (5) erfolgt.

6. Vorrichtung zum Bearbeiten der Eckverbindungen von aus Kunststoff- oder Metallprofilstücken zusammengeschweißten Rahmen (5), insbesondere Fenster- oder Türrahmen mit wenigstens einem Bearbeitungswerkzeug (2, 3, 4), welches durch einen eine Tasteinrichtung aufweisenden Werkzeugträger (1) in seine Bearbeitungsstellung an den in einer Aufspanneinrichtung aufgenommenen Rahmen (5) verfahrbar ist, dadurch gekennzeichnet, daß die Tasteinrichtung wenigstens einen Sensor (6) zur vor der Bearbeitung durchzuführenden Abtastung wenigstens einer parallel zur Aufspannebene des Rahmens (5) verlaufenden Bearbeitungsfläche aufweist sowie mit einer Steuereinrichtung zur Auswertung des oder der vor der Bearbeitung gewonnenen Meßwerte und nachfolgenden Ausrichtung des mindestens einen Bearbeitungswerkzeuges (2, 3, 4) in eine Grundstellung bezüglich des Rahmens (5) zur Bearbeitung der Bearbeitungsfläche.

7. Vorrichtung nach Anspruch 6, dadurch gekennzeichnet, daß der Sensor (6) zum Abtasten der äußeren Endbereiche der Rahmeneckverbindung ausgebildet ist.

8. Vorrichtung nach Anspruch 6 oder 7, dadurch gekennzeichnet, daß der Sensor (6) zur Abtastung im Gehrungsbereich der zusammengeschweißten Profilstücke des Rahmens (5) ausgebildet ist.

9. Vorrichtung nach einem der Ansprüche 6 bis 8, dadurch gekennzeichnet, daß der Sensor (6) an der Spanneinheit der Aufspanneinrichtung zum Einspannen der Rahmenschenkel angeordnet ist.

10. Vorrichtung nach einem der Ansprüche 6 bis 8, dadurch gekennzeichnet, daß der Sensor (6) an dem Werkzeugträger (1) für die Bearbeitungswerkzeuge (2, 3, 4) angeordnet ist.

11. Vorrichtung nach einem der Ansprüche 6 bis 10, dadurch gekennzeichnet, daß die Steuereinrichtung als NC-Steuerung und der Sensor (6) als Schaltelement ausgebildet ist, welches bzgl. einer Achse der NC-Steuerung, vorzugsweise der senkrecht auf der Aufspannebene des Rahmens stehenden Achse, aktivierbar ist.

12. Vorrichtung nach Anspruch 11, dadurch gekennzeichnet, daß die beim Vermessen des Rahmens (5) durch das Schaltelement (6) erhaltenen Schaltimpulse einem schaltzeitfreien Eingang der NC-Steuerung zur Ausrichtung bzw. zur Nullpunkt-Verschiebung der Bearbeitungswerkzeuge (2, 3, 4) zugeführt werden.

13. Vorrichtung nach einem der Ansprüche 6 bis 12, dadurch gekennzeichnet, daß zumindest ein Sensor zur Abtastung wenigstens einer bzgl. der Aufspannebene des Rahmens (5) senkrecht verlaufenden Bearbeitungsfläche des Rahmens (5) vorgesehen ist.

14. Vorrichtung nach einem der Ansprüche 6 bis 13, dadurch gekennzeichnet, daß zumindest zwei Sensoren zur Abtastung von zwei gegenüberliegenden und bzgl. der Aufspannebene des Rahmens (5) senkrecht verlaufende Bearbeitungsflächen vorgesehen sind.

15. Vorrichtung nach einem der Ansprüche 6 bis 14, dadurch gekennzeichnet, daß der mindestens eine Sensor (6) bzw. das mindestens eine Schaltelement eine Meßgenauigkeit von besser als 1/100 mm aufweist.

## Claims

1. Method for machining the corner connections of frames (5) welded together of section members of synthetic material or metal, in particular window or door frames, with at least one machining tool (2, 3, 4), which is movable into its machining position at the frame (5), which is received in a clamping equipment, by a tool carrier (1) comprising a scanning equipment, characterised thereby, that at least one machining surface, which extends parallelly to the clamping plane of the frame (5), is scanned before the machining and the measurement value or values obtained in that case is or are converted by way of a control equipment as setting magnitude or magnitudes for the orientation of the at least one machining tool (2, 3, 4) into a basic setting at the workpiece.

2. Method according to claim 1, characterised thereby, that the scanning takes place in the region of the outer edges of the frame (5).

3. Method according to claim 1 or 2, characterised thereby, that the scanning takes place in the region of the mitre of the welded-together section members of the frame (5).

4. Method according to one of the claims 1 to 3, characterised thereby, that several measurement values, preferably at different measurement points, are picked up at the at least one machining surface, which extends parallelly to the clamping plane of the frame (5), and the setting magnitudes for the setting of the at least one machining tool (2, 3, 4) are formed therefrom in relation to a theoretical zero value.

5. Method according to one of the claims 1 to 4, characterised thereby, that the scanning takes place at either the upper side and/or underside or the front side and/or the rear side of the frame (5).

6. Device for machining the corner connections of frames (5) welded together of section members of synthetic material or metal, in particular window or door frames, with at least one machining tool (2, 3, 4), which is movable into its machining position at the frame (5), which is received in a clamping equipment, by a tool carrier (1) comprising a scanning equipment, characterised thereby, that the scaning equipment comprises at least one sensor (6) for the scanning, which is to be performed before the machining, of at least one machining surface, which extends parallelly to the clamping plane of the frame (5), as well as a control equipment for the evaluation of the measurement value or values obtained before the machining and for the following orientation of the at least one machining tool (2, 3, 4) into a basic setting with respect to the frame (5) for the machining of the surface to be machined.

7. Device according to claim 6, characterised thereby, that the sensor (6) is constructed for scanning the outer end regions of the frame corner connection.

8. Device according to claim 6 or 7, characterised thereby, that the sensor (6) is constructed for scanning in the mitre region of the welded-together section members of the frame (5).

9. Device according to one of the claims 6 to 8, characterised thereby, that the sensor (6) is arranged at the clamping unit of the clamping equipment for the clamping-in of the frame limbs.

10. Device according to one of the claims 6 to 8, characterised thereby, that the sensor (6) is arranged at the tool carrier (1) for the machining tools (2, 3, 4).

11. Device according to one of the claims 6 to 10, characterised thereby, that the control equipment is constructed as numerical control and the sensor (6) is constructed as switching element which is activatable with respect to one axis of the numerical control, preferably the axis perpendicular to the clamping plane of the frame.

12. Device according to claim 11, characterised thereby, that the switching pulses, which are obtained through the switching element (6) during the measuring of the frame (5), are fed to a switching-time-free input of the numerical control for the orientation or for the zero point displacement of the machining tools (2, 3, 4).

13. Device according to one of the claims 6 to 12, characterised thereby, that at least one sensor is provided for the scanning of at least one machining surface, which extends perpendicularly to the clamping plane of the frame (5), of the frame (5).

14. Device according to one of the claims 6 to 13, characterised thereby, that at least two sensors are provided for the scanning of at least two mutually opposite machining surfaces extending perpendicularly to the clamping plane of the frame (5).

15. Device according to one of the claims 6 to 14, characterised thereby, that the at least one sensor (6) or the at least one switching element displays a measurement accuracy of better than 0.01 millimetres.

## Revendications

1. Procédé d'usinage des joints d'angle de cadres soudés (5) assemblés à partir de profilés en matière plastique ou en métal, en particulier des cadres de fenêtres ou de portes, au moyen d'au moins un outil d'usinage (2, 3, 4) qui peut être amené dans sa position d'usinage sur un cadre (5), maintenu dans un dispositif de serrage, par l'intermédiaire d'un support d'outil (1) comportant un dispositif palpeur,
caractérisé en ce qu'avant l'usinage, au moins une surface d'usinage s'étendant parallèlement au plan de support de serrage du cadre (5) est explorée, et que la ou les valeur(s) de mesure ainsi obtenue(s) est (sont) convertie(s), en tant que variable(s) de réglage pour l'alignement dudit au moins un outil d'usinage (2, 3, 4), en un réglage de base par rapport à la pièce à usiner, par l'intermédiaire d'un dispositif de commande.

2. Procédé selon la revendication 1, caractérisé en ce que l'exploration par palpage est effectuée au niveau des bords extérieurs du cadre (5).

3. Procédé selon la revendication 1 ou 2, caractérisé en ce que l'exploration par palpage est effectuée au niveau de l'onglet des éléments profilés soudés du cadre (5).

4. Procédé selon l'une des revendications 1 à 3, caractérisé en ce que plusieurs valeurs de mesure, de préférence relevées à différents points de mesure, sont relevées sur ladite au moins une face d'usinage s'étendant parallèlement au plan de serrage du cadre, et en ce que les variables de réglage pour le réglage dudit au moins un outil d'usinage (2, 3, 4) sont calculées à partir de ces valeurs par rapport à un point zéro théorique.

5. Procédé selon l'une des revendications 1 à 4, caractérisé en ce que l'exploration par palpage est effectuée au niveau de la face supérieure et/ou inférieure, ou au niveau de la face avant et/ou arrière du cadre (5).

6. Dispositif d'usinage des joints d'angle de cadres soudés (5) assemblés à partir de profilés en matière plastique ou en métal, en particulier des cadres de fenêtres ou de portes, au moyen d'au moins un outil d'usinage (2, 3, 4) qui peut être amené dans sa position d'usinage sur un cadre (5), maintenu dans un dispositif de serrage, par l'intermédiaire d'un support d'outil (1) comportant un dispositif palpeur,
caractérisé en ce que le dispositif palpeur comporte au moins un capteur (6) permettant d'effectuer l'exploration, à exécuter avant l'usinage, d'au moins une surface d'usinage s'étendant parallèlement au plan de serrage du cadre (5), et en ce qu'il comprend un dispositif de commande destiné à analyser la ou les valeur(s) de mesure relevée(s) avant l'usinage, et à aligner ensuite ledit au moins un outil d'usinage (2, 3, 4) dans une position de départ par rapport au cadre (5), en vue de l'usinage de la surface d'usinage.

7. Dispositif selon la revendication 6, caractérisé en ce que le capteur (6) est configuré pour palper les zones terminales extérieures du joint d'angle du cadre.

8. Dispositif selon la revendication 6 ou 7, caractérisé en ce que le capteur (6) est configuré pour palper la zone d'onglet du cadre (5) assemblé d'éléments profilés soudés.

9. Dispositif selon l'une des revendications 6 à 8, caractérisé en ce que le capteur (6) est disposé sur l'unité de serrage du dispositif de serrage destiné à serrer les côtés du cadre.

10. Dispositif selon l'une des revendications 6 à 8, caractérisé en ce que le capteur (6) est disposé sur le support d'outil (1) prévu pour les outils d'usinage (2, 3, 4).

11. Dispositif selon l'une des revendications 6 à 10, caractérisé en ce que le dispositif de commande est réalisé sous forme d'une commande CN et le capteur (6) est réalisé sous forme d'un élément commutateur pouvant être activé dans un axe de la commande CN, de préférence dans l'axe orienté perpendiculairement au plan de serrage du cadre.

12. Dispositif selon la revendication 11, caractérisé en ce que les impulsions de commande obtenues lors de la mesure du cadre (5) par l'élément commutateur (6) sont acheminées à une entrée temps réel de la commande CN en vue de l'alignement ou décalage du point zéro des outils d'usinage (2, 3, 4).

13. Dispositif selon l'une des revendications 6 à 12, caractérisé en ce qu'au moins un capteur est prévu pour palper au moins une surface d'usinage du cadre (5) qui s'étend perpendiculairement au plan de serrage du cadre (5).

14. Dispositif selon l'une des revendications 6 à 13, caractérisé en ce qu'au moins deux capteurs sont prévus pour palper deux surfaces d'usinage opposées et s'étendant perpendiculairement au plan de serrage du cadre (5).

15. Dispositif selon l'une des revendications 6 à 14, caractérisé en ce que ledit au moins un capteur (6) ou ledit au moins un élément commutateur offrent une précision de mesure meilleure que 1/100 mm.
